# EUROPEAN PATENT APPLICATION

(11) **EP 4 678 276 A1**
(43) Date of publication of application: **14.01.2026**
(21) Application number: 24766788.4
(22) Date of filing: 13.02.2024
(51) Int. Cl.: B01F 23/235, B01F 25/64, B01F 35/71, B01F 35/75, C04B 28/14, B01F 101/28

(54) **FOAMING DEVICE, GYPSUM BOARD MANUFACTURING DEVICE, FOAMING METHOD, AND GYPSUM BOARD MANUFACTURING METHOD**

(30) Priority: 08.03.2023 JP 2023035721
(71) Applicant: Yoshino Gypsum Co., Ltd., Tokyo 100-0005 (JP)
(72) Inventor: TANI, Hirokuni, Tokyo 100-0005 (JP); NAKAYA, Akira, Tokyo 100-0005 (JP)
(74) Representative: Ter Meer Steinmeister & Partner
(86) International application number: PCT/JP2024/004879
(87) International publication number: WO 2024/185416

(57) **Abstract**

A foaming apparatus includes a foaming unit; and a raw material supply device configured to supply a raw material for producing foam, the raw material including a foaming agent, wherein the foaming unit includes a rotating shaft; a rotating member that is at least one element selected from among a rotating blade, a rotating wing, and a rotating plate that is installed on the rotating shaft and that rotates about the rotating shaft; a housing configured to house the rotating member; a supply port that is provided in the housing and that is configured to supply the raw material for producing foam into the housing from the raw material supply device; and an ejection port that is provided in the housing and that is configured to eject foam that is produced in the housing by foaming the raw material, wherein an area of the housing, which is separated from a central axis of the rotating member by more than half a radius of the rotating member, is defined as an outer peripheral area, an area of the housing, whose distance from the central axis of the rotating member is less than or equal to half the radius of the rotating member, is defined as an inner peripheral area, the supply port is provided in the outer peripheral area of the housing, and the ejection port is provided in the housing so as to include the inner peripheral area.

## Description

### TECHNICAL FIELD

The present invention relates to a foaming apparatus, a gypsum plate manufacturing apparatus, a foaming method, and a gypsum plate manufacturing method.

### BACKGROUND OF THE INVENTION

Patent Document 1 discloses an apparatus for preparing a foam for bonding to a cementitious slurry, including a conduit having an suction port for receiving a gas feed and a surfactant feed and an discharge port for allowing extraction of the foam, wherein the conduit contains a porous plug providing a partial barrier to a fluid flow along the conduit, wherein the plug includes a plurality of particles packed in a regular array, wherein the particles define a three-dimensional network of pores extending therebetween, wherein the apparatus includes an elastic component positioned between the plug and the conduit.

### Related Art Documents

### Patent Document

Patent document 1: Japanese Translation of PCT International Application Publication No. JP-T-2017-519635

### SUMMARY OF THE INVENTION

### Problems to be solved by the Invention

Conventionally, when gypsum products such as gypsum plates are manufactured, in order to reduce the weight of the gypsum product, foam is added to the gypsum slurry that is a raw material. The foam added to the gypsum slurry remains as bubbles in the gypsum product obtained by molding and curing the gypsum slurry.

Foam to be added to a gypsum slurry is manufactured by mixing and foaming the raw materials for producing foam including a foaming agent. Conventionally, a foaming apparatus has been studied so as to manufacture foam of a desired size and shape.

However, in the conventional foaming apparatus, the amount of foam raw materials for producing foam required to create a desired volume of foam has been large. Therefore, from the viewpoint of cost reduction, etc., there has been demand to reduce the amount of raw materials for producing foam required for manufacturing foam.

Accordingly, an object of an aspect of the present invention is to provide a foaming apparatus capable of reducing the amount of raw materials for producing foam required for manufacturing foam.

### MEANS FOR SOLVING THE PROBLEM

In order to solve the above problems, according to one aspect of the present invention, there is provided
a foaming apparatus including
a foaming unit; and
a raw material supply device configured to supply a raw material for producing foam, the raw material including a foaming agent, wherein
the foaming unit includes
   a rotating shaft;
   a rotating member that is at least one element selected from among a rotating blade, a rotating wing, and a rotating plate that is installed on the rotating shaft and that rotates about the rotating shaft;
   a housing configured to house the rotating member;
   a supply port that is provided in the housing and that is configured to supply the raw material for producing foam into the housing from the raw material supply device; and
   an ejection port that is provided in the housing and that is configured to eject foam that is produced in the housing by foaming the raw material, wherein
an area of the housing, which is separated from a central axis of the rotating member by more than half a radius of the rotating member, is defined as an outer peripheral area,
an area of the housing, whose distance from the central axis of the rotating member is less than or equal to half the radius of the rotating member, is defined as an inner peripheral area,
the supply port is provided in the outer peripheral area of the housing, and
the ejection port is provided in the housing so as to include the inner peripheral area.

### EFFECTS OF THE INVENTION

According to one aspect of the present invention, it is possible to provide a foaming apparatus capable of reducing the amount of raw materials required for manufacturing foam.

### BRIEF DESCRIPTION OF THE DRAWINGS

[FIG. 1] FIG. 1 is an explanatory diagram of a foaming unit of a foaming apparatus according to one embodiment of the present invention.
[FIG. 2] FIG. 2 is an explanatory diagram of one configuration example of a foaming apparatus according to one embodiment of the present invention.
[FIG. 3] FIG. 3 is an explanatory diagram of another configuration example of a foaming apparatus according to one embodiment of the present invention.
[FIG. 4] FIG. 4 is an explanatory diagram of a configuration example of a gypsum plate manufacturing apparatus according to one embodiment of the present invention.

### DETAILED DESCRIPTION OF THE INVENTION

An embodiment of the present invention is described below with reference to drawings; however, the present invention is not limited to the following embodiments, and various modified examples and substitutions may be made to the following embodiments without departing from the scope of the present invention.

### [Foaming apparatus]

A foaming apparatus according to an embodiment of the present disclosure (hereinafter referred to as "embodiment") will be described below with reference to the drawings.

The drawings are schematic diagrams for explaining the configuration of the foaming apparatus according to the present embodiment, and do not accurately describe the size, etc.

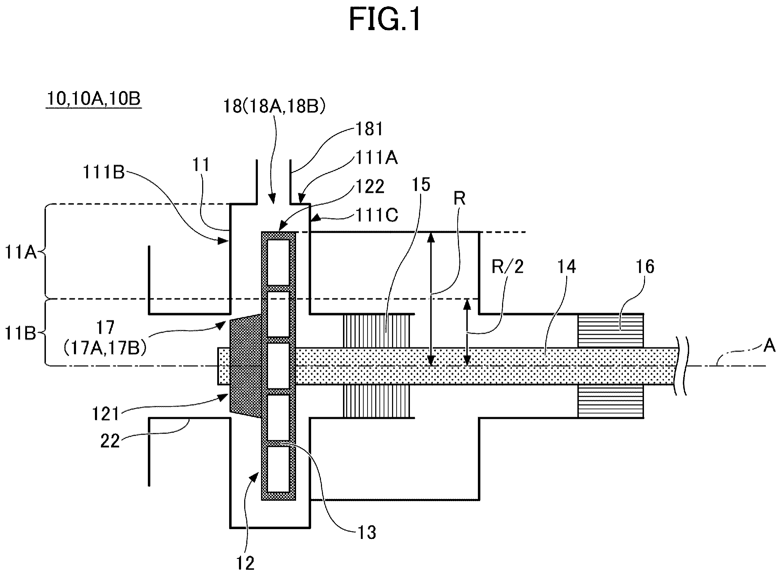

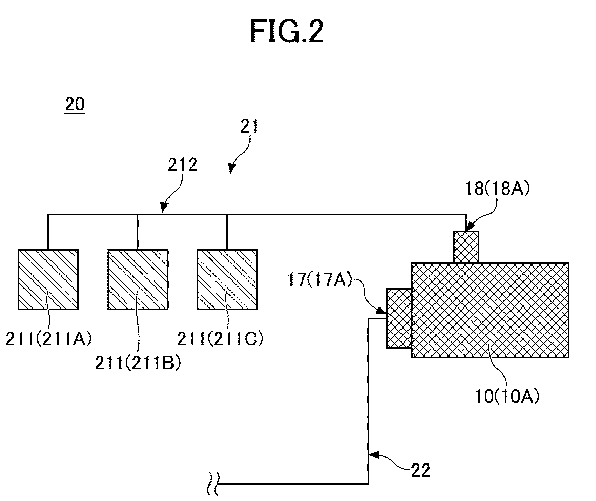

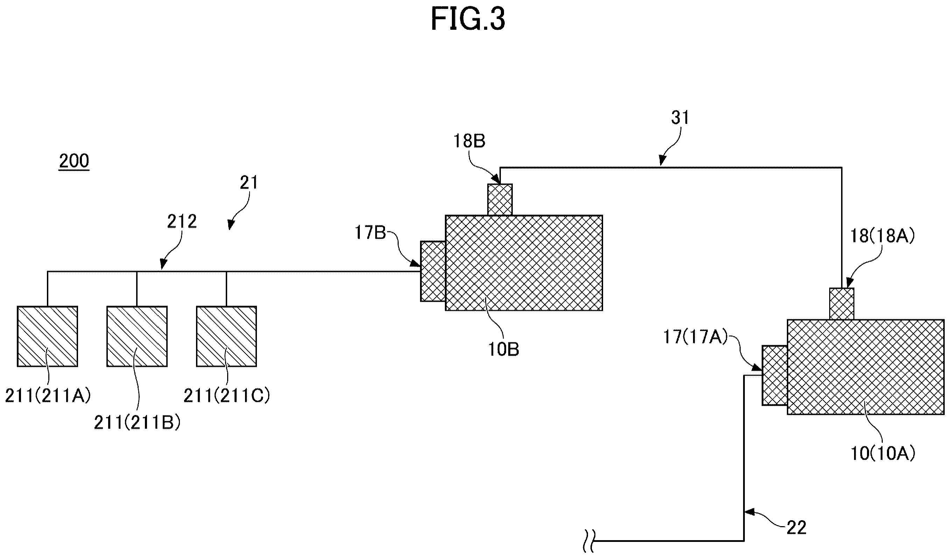

FIG. 1 is an explanatory diagram of a foaming unit of the foaming apparatus according to the present embodiment. FIGS. 2 and 3 are explanatory diagrams of an example configuration of the foaming apparatus according to the present embodiment. A foaming apparatus 200 illustrated in FIG. 3 is a modified example of a foaming apparatus 20 illustrated in FIG. 2. Therefore, the foaming apparatus according to the present embodiment will be described by mainly using FIG. 2, and FIGS. 1 and 3 will be used as necessary.

As illustrated in FIG. 2, the foaming apparatus 20 of the present embodiment may have a foaming unit 10 and a raw material supply device 21.

Each member of the foaming apparatus of the present embodiment will be described below.

### (1) Foaming unit

### (1-1) Configuration of foaming unit

The inventors of the present invention have studied a foaming apparatus capable of reducing the amount of raw materials for producing foam required for manufacturing foam. Reducing the amount of raw materials for producing foam required for manufacturing foam means reducing the amount of raw materials for producing foam required for manufacturing foam per unit volume. Because raw materials for producing foam usually include a foaming agent, water, and air, the amount of raw materials for producing foam means the total amount of these components, for example, the total volume.

A foaming agent, water, and air are usually used as raw materials for producing foam. According to the study by the inventors of the present invention, the large amount of raw materials for producing foam required for manufacturing foam in the conventional foaming apparatus is presumed to be caused by the inability to uniformly mix raw materials for producing foam. Therefore, it is considered that, by making the foaming apparatus uniformly mix the components constituting raw materials for producing foam, it is possible to produce a desired volume of foam while reducing the amount of raw materials for producing foam.

Therefore, the inventors of the present invention supplied raw materials for producing foam to various apparatuses and compared the amount of raw materials for producing foam used per volume of foam produced. As a result, it was found that the amount of raw materials for producing foam used per volume of foam can be reduced when a rotating member is rotated, the raw materials for producing foam are supplied to the rotating member from a supply port arranged in the outer peripheral area of the housing, and the foam is ejected from the ejection port arranged to include the inner peripheral area of the housing, and completed the present invention. It is considered that, with the above configuration, the raw materials for producing foam flow in the direction opposite to the direction in which the centrifugal force of the rotating member works, and, therefore, the mixing of raw materials for producing foam is improved, and the amount of raw materials for producing foam used per volume of foam can be reduced.

FIG. 1 illustrates an example of the configuration of the foaming unit 10. FIG. 1 is a cross-sectional view taken along a central axis A to explain the configuration of the inside of the foaming unit 10. The central axis A is the central axis of a rotating member 12 and a rotating shaft 14, and the rotating member 12 and the rotating shaft 14 can rotate with the central axis A as the axis of rotation.

As illustrated in FIG. 1, the foaming unit 10 can include a rotating shaft 14, a rotating member 12, a housing 11, a supply port 18, and an ejection port 17.

### (Rotating shaft)

The rotating shaft 14 can be configured to rotate the rotating member 12 described below. The rotating shaft 14 can be connected to a motor or the like, and can transmit the rotation by the motor or the like to the rotating member 12. The rotating shaft 14 can be fixed to the housing 11 by a shaft seal 15 or a bearing 16, so as not to inhibit rotation.

### (Rotating member)

The rotating member 12 can be at least one selected from a rotating blade, a rotating wing, or a rotating plate installed on the rotating shaft 14 and rotating about the rotating shaft 14. The rotating member 12 can also include two or more members selected from a rotating blade, a rotating wing, and a rotating plate, such as a rotating blade and a rotating plate. For example, when the rotating member 12 has a rotating blade and a rotating plate, the two members may be separated, and the two members may be joined together to form one body.

The rotating member 12 may be fixed to the rotating shaft 14 by welding, by an adhesive, or the like, or may be fixed by a fixing jig such as a bolt or nut and configured to be removable.

The rotating blade and the rotating wing are not particularly limited, but may include one or more types selected from among, for example, paddle blades, turbine blades, propeller blades, helical ribbon blades, screw blades, and the like.

The rotating plate may be any plate-like body, and may have a disk shape, for example. Irregularities or the like may be provided on the side surfaces, if necessary.

### (Housing)

The housing 11 can accommodate the rotating member 12. The housing 11 can be configured to partition the space for mixing the raw materials for producing foam supplied from the raw material supply device 21, from other spaces. The housing 11 may be configured to accommodate, for example, part or all of the rotating shaft 14.

### (Supply port)

The supply port 18 is provided in the housing 11 and can be configured to supply the raw materials for producing foam into the housing 11 from the raw material supply device 21. Therefore, the supply port 18 is an opening provided in the housing 11 to connect the inside of the housing 11 and the outside of the housing 11. The supply port 18 is provided in an outer peripheral area 11A of the housing 11.

The outer peripheral area 11A can be defined as an area of the housing 11 that is farther from the central axis A of the rotating member 12 than half (R/2) of the radius R of the rotating member 12. In FIG. 1, an inner peripheral area 11B can be defined as an area of the housing 11 where the distance from the central axis A of the rotating member 12 is less than half (R/2) of the radius R of the rotating member 12. The radius R of the rotating member 12 means the radius of the longest portion of the rotating member 12. The outer peripheral area 11A may be an area of the housing 11 excluding the inner peripheral area 11B. In FIG. 1, the outer peripheral area 11A and the inner peripheral area 11B are indicated only with respect to the area above the central axis A, but the outer peripheral area 11A and the inner peripheral area 11B are also defined in other areas, such as the area below the central axis A, based on the above definitions.

The supply port 18 is preferably arranged such that the raw materials for producing foam supplied from the supply port 18 comes into contact with the rotating member 12, and more preferably, the supply port 18 is arranged so as to come into contact with particularly the area located within the outer peripheral area 11A of the rotating member 12.

For example, in the foaming unit 10 illustrated in FIG. 1, the supply port 18 is provided on a side surface 111A of the housing 11, and the raw materials for producing foam supplied from the supply port 18 come into contact with a side surface 122 of the rotating member 12 and its periphery. However, as described above, the supply port 18 may be provided at any place in the outer peripheral area 11A of the housing 11, and the supply port 18 may be provided, for example, on a first end surface 111B or a second end surface 111C of the housing 11.

The supply port 18 may be connected with a supply pipe 181 for connecting to a device for supplying raw materials for producing foam or the like for supplying the raw materials for producing foam as illustrated in FIG. 1. The supply pipe 181 may be connected to a raw material supply pipe 212 and a pipe 31 described below. The supply pipe 181 may be an integral pipe continuous with the raw material supply pipe 212 and the pipe 31.

### (Ejection port)

The ejection port 17 is provided in the housing 11 and can be configured to eject foam produced in the housing 11. Therefore, the ejection port 17 is an opening provided in the housing 11 to connect the inside of the housing 11 and the outside of the housing 11.

The ejection port 17 is preferably provided in the housing 11 so as to include the inner peripheral area 11B, and more preferably, the entire ejection port 17 is provided in the inner peripheral area 11B of the housing 11.

The ejection port 17 can be provided on a surface of the housing 11 that intersects with the central axis A of the rotating member 12 or the rotating shaft 14, that is, the intersecting surface. Here, the surface of the housing 11 that intersects with the central axis A of the rotating member 12 or the like means a surface that is in contact with and that shares at least one point with the central axis A of the rotating member 12 or the like. However, for example, the central axis A of the rotating member 12 includes not only a portion located within the rotating member 12 but also a portion extended outside the rotating member 12 as illustrated in FIG. 1.

Therefore, the ejection port 17 is preferably provided in the first end surface 111B or the second end surface 111C of the housing 11, which intersect with the central axis A of the housing 11. However, because the rotating shaft 14 and the like are provided in the inner peripheral area 11B of the second end surface 111C, it is more preferable to provide the ejection port 17 in the first end surface 111B of the housing 11 which is the surface with which the rotating shaft 14 does not directly contact.

For this reason, the ejection port 17 is more preferably provided to include the inner peripheral area 11B of the first end surface 111B of the housing 11, and is particularly preferably provided within the inner peripheral area 11B.

The foam ejected from the ejection port 17 can be supplied to other devices through the foam supply pipe 22 as illustrated in FIGS. 1 and 2, for example. The foam supply pipe 22 is arranged along the rotating shaft 14 at the portion connected to the ejection port 17.

When the raw materials for producing foam are supplied from the supply port 18 provided in the outer peripheral area of the housing 11 and the foam is ejected from the ejection port 17 provided so as to include the inner peripheral area of the housing 11, the raw materials for producing foam flow in the direction opposite to the direction in which the centrifugal force by the rotating member 12 that is rotating acts. Therefore, it is considered that the raw materials for producing foam can be uniformly mixed and foamed, and the foam of uniform size can be generated. As a result, according to the foaming apparatus of the present embodiment, the amount of raw materials for producing foam used per unit volume of the generated foam can be reduced.

### (1-2) First centrifugal pump

The foaming unit 10 may have the above-described configuration, but a centrifugal pump may be used for the foaming unit 10.

That is, the foaming unit 10 may be configured by the first centrifugal pump 10A.

As illustrated in FIG. 1, the first centrifugal pump 10A, which is a centrifugal pump, may have the same structure as the foaming unit 10, and a rotating member 12 such as an impeller, which is a rotating plate having blades 13, is arranged in a casing that is the housing 11. The housing 11 is provided with a first suction port 17A and a first discharge port 18A. When the first centrifugal pump 10A, which is a centrifugal pump, is used as a regular pump, the object to be transported sucked in from the first suction port 17A comes into contact with the upper surface 121 of the rotating member 12, and a centrifugal force is applied to the object to be transported by the rotating member 12 that is rotating. Then, the object to be transported is discharged in the tangential direction of the side surface 122 of the rotating member 12 and discharged from the first discharge port 18A, such that the object is transported.

When the first centrifugal pump is used as the foaming unit 10 of the foaming apparatus 20 of the present embodiment, the supply port 18 of the foaming unit 10 can be the first discharge port 18A of the first centrifugal pump 10A. That is, the raw materials for producing foam can be supplied to the first discharge port 18A of the first centrifugal pump 10A.

The ejection port 17 of the foaming unit 10 can be used as the first suction port 17A of the first centrifugal pump 10A.

That is, when the first centrifugal pump 10A is used as the foaming unit 10 of the foaming apparatus 20 of the present embodiment, the fluid flow in the first centrifugal pump 10A is in an opposite direction to that in the case where the first centrifugal pump 10A is used as a regular pump.

When the first discharge port 18A and the first suction port 17A of the first centrifugal pump 10A are used as the supply port 18 and the ejection port 17 of the foaming unit 10, respectively, the supply port 18 and the ejection port 17 can be arranged at the positions in the housing 11 described with respect to the foaming unit 10. Therefore, even when the foaming unit 10 is configured with the first centrifugal pump 10A, the same effect described in "(1-1) Configuration of foaming unit" can be achieved.

In the present specification, the suction port and the discharge port of the centrifugal pump mean the suction port and the discharge port when the centrifugal pump is used as a regular pump, that is, when the centrifugal pump is used as a pump for transporting the object to be transported.

### (1-3) Second centrifugal pump

The foaming apparatus according to the present embodiment may further include a second centrifugal pump.

That is, as illustrated in FIG. 3, the foaming apparatus 200 according to the present embodiment may further include a second centrifugal pump 10B in addition to the foaming unit 10 described above. As illustrated in FIG. 1, the second centrifugal pump 10B may also have the same structure as the foaming unit 10.

When the foaming apparatus 200 includes the foaming unit 10 and the second centrifugal pump 10B, the second centrifugal pump 10B can be arranged between the foaming unit 10 and the raw material supply device 21 in the supply path for the raw materials for producing foam.

Because the second centrifugal pump 10B has a function of mixing the raw materials for producing foam while transporting the raw materials, unlike the case where the first centrifugal pump 10A is used as the foaming unit 10, the raw materials for producing foam can be sucked in from the second suction port 17B and discharged from the second discharge port 18B. That is, in the second centrifugal pump 10B of the foaming apparatus 200 of the present embodiment, the fluid flow in the second centrifugal pump 10B is in the same direction in the case where the second centrifugal pump 10B is used as a regular pump, that is, in the forward direction.

Foam may be produced when the raw materials for producing foam are mixed in the second centrifugal pump 10B. That is, the raw materials may be foamed in the second centrifugal pump 10B.

As illustrated in FIG. 3, when the foaming apparatus 200 has the foaming unit 10 and the second centrifugal pump 10B, the raw material supply device 21 can supply the raw materials for producing foam to the second suction port 17B, which is the suction port of the second centrifugal pump 10B. Further, the second discharge port 18B of the second centrifugal pump 10B and the supply port 18 of the foaming unit 10 can be connected by the pipe 31.

In the foaming apparatus 200, the first centrifugal pump 10A can also be used for the foaming unit 10, and in this case, the second discharge port 18B of the second centrifugal pump 10B and the first discharge port 18A of the first centrifugal pump 10A can be connected by the pipe 31.

In the foaming apparatus 200 illustrated in FIG. 3, the raw material supply device 21 supplies the raw materials for producing foam to the supply port 18 of the foaming unit 10 through the second centrifugal pump 10B.

The pipe 31 may be configured such that the raw materials for producing foam mixed by the second centrifugal pump 10B can be transported to the foaming unit 10. The pipe 31 may be provided with a check valve or a tank for temporarily storing the raw materials for producing foam according to the difference in capacity between the foaming unit 10 and the second centrifugal pump 10B.

Because the foaming apparatus 200 has the second centrifugal pump 10B in addition to the foaming unit 10, the raw materials for producing foam can be mixed while being transported by the second centrifugal pump 10B, and then mixed more uniformly in the foaming unit 10. Therefore, the amount of raw materials for producing foam used per volume of generated foam can be further reduced. That is, the amount of raw materials required for manufacturing foam can be further reduced.

In the present specification, the notations of first, second, and the like of the first centrifugal pump 10A, the second centrifugal pump 10B, the first suction port 17A, the second suction port 17B, the first discharge port 18A, the second discharge port 18B and the like are assigned to distinguish between two pumps or members in the description. Therefore, these notations do not indicate the order of connection, etc., and the first, second, and the like may be omitted if there is no risk of confusion.

### (Types of centrifugal pumps)

When the first centrifugal pump is used as the foaming unit 10, the type of the first centrifugal pump is not particularly limited, and it is preferable to use a spiral pump or a turbine pump.

Similarly, the type of the second centrifugal pump 10B is not particularly limited, and it is preferable to use a spiral pump or a turbine pump.

The first centrifugal pump 10A and the second centrifugal pump 10B may be different in type, size, and other configurations, or may be the same.

Thus far, the foaming apparatus has been described as an example of having one foaming unit 10 or one foaming unit 10 and one second centrifugal pump 10B, but the configuration is not limited. The number of each member in the foaming apparatus can be selected according to the amount of foaming required in the foaming apparatus, the capacity of each member, and the like. Therefore, for example, two or more foaming units 10 can be arranged in series or in parallel along the flow of the raw materials for producing foam. In the foaming apparatus, for example, two or more second centrifugal pumps 10B can be arranged in series or in parallel along the flow of the raw materials for producing foam.

### (2) Raw material supply device

The raw material supply device 21 can supply the raw materials for producing foam containing a foaming agent, to the foaming unit 10 and the second centrifugal pump 10B.

As long as the raw material supply device 21 can supply the raw materials for producing foam to the foaming unit 10 and the second centrifugal pump 10B, the configuration thereof is not particularly limited.

### (Raw material tank)

The raw material supply device 21 can have a raw material tank 211 for storing the raw materials for producing foam, for example, as illustrated in FIGS. 2 and 3.

As the raw materials for producing foam, a foaming agent, water, air, and the like are used as described in " (1) Foaming unit". Therefore, the raw material supply device 21 may have, for example, a first raw material tank 211A, a second raw material tank 211B and a third raw material tank 211C as the raw material tank 211. The first raw material tank 211A may contain a foaming agent, the second raw material tank 211B may contain water, and the third raw material tank 211C may contain air. However, the number of tanks is not limited to three, and may be more or less than three.

In order to supply raw materials from the raw material tank 211 to the raw material supply pipe 212, a pump or the like (not illustrated) may be provided on the raw material tank 211 and the raw material supply pipe 212.

### (Raw material supply pipe)

The raw material supply device 21 may also have a raw material supply pipe 212 connecting the raw material tank 211 and the supply port 18 of the foaming unit 10. When the foaming apparatus 200 has a second centrifugal pump 10B as illustrated in FIG. 3, the raw material supply pipe 212 can connect the raw material tank 211 and the second suction port 17B of the second centrifugal pump 10B.

The configuration of the raw material supply pipe 212 is not particularly limited, and when there are multiple raw material tanks 211, a plurality of raw material supply pipes 212 may be arranged so as to connect each raw material tank 211 to the foaming unit 10 or the second centrifugal pump 10B. In this case, multiple pipes may be used as the raw material supply pipe 212.

Further, a mixer may be provided on the pipe path of the raw material supply pipe 212 so that part or all of the raw materials for producing foam may be mixed in the middle of the raw material supply pipe 212, and the mixed raw materials for producing foam may be supplied to the foaming unit or the like by one raw material supply pipe 212.

The raw material supply pipe may be provided with a mass flow controller or the like for controlling the flow rate of the raw materials for producing foam as necessary.

### (Other)

In the foaming apparatus 20 of the present embodiment, it is preferable that the raw material supply device 21 is configured to apply pressure to the raw materials for producing foam so that the raw materials for producing foam can be easily supplied into the foaming unit 10.

For example, it is preferable to use pressurized air as the air contained in the raw materials for producing foam, and to pressurize water and a foaming agent to supply the raw materials for producing foam to the foaming unit 10. Therefore, if necessary, a pump for pressurizing the raw materials for producing foam can be provided on the raw material supply pipe 212. Further, if necessary, a check valve or the like can be provided on the raw material supply pipe 212 to prevent backflow of the raw materials for producing foam.

### [Foaming method]

The foaming method according to the embodiment will be described below. The foaming method according to the embodiment can be implemented using, for example, the foaming apparatus according to one aspect of the disclosure. Therefore, the description of the matters already described will be omitted.

The foaming method according to the embodiment can have the following raw material supply step and foaming step.

In the raw material supply step, raw materials for producing foam containing a foaming agent can be supplied to the supply port 18 of the foaming unit 10.

In the foaming step, the raw material can be foamed in the foaming unit 10 and the foam can be ejected from the ejection port 17 of the foaming unit 10.

Each step will be described below.

### (Raw material supply step)

In the raw material supply step, for example, raw materials for producing foam containing a foaming agent can be supplied to the supply port 18 of the foaming unit 10 by the raw material supply pipe 212 of the raw material supply device 21 of the foaming apparatus 20 illustrated in FIG. 2.

The foaming unit 10 may have the rotating shaft 14, the rotating member 12, the housing 11, the supply port 18, and the ejection port 17, as described for the foaming apparatus.

The rotating member 12 is installed on the rotating shaft 14 and can be at least one selected from a rotating blade, a rotating wing, and a rotating plate rotating about the rotating shaft 14.

The housing 11 can accommodate the rotating member.

The supply port 18 is provided in the housing 11 and can supply the raw materials for producing foam into the housing 11. The supply port 18 is provided in the outer peripheral area 11A of the housing 11. The outer peripheral area 11A can be defined as an area in the housing 11 which is separated from the central axis A of the rotating member 12 by more than half the radius R of the rotating member 12.

The ejection port 17 is provided in the housing 11 and can eject the foam produced in the housing 11. The ejection port 17 is provided in the housing 11 so as to include the inner peripheral area 11B. The inner peripheral area 11B can be defined as an area in the housing 11 where the distance from the central axis A of the rotating member 12 is less than or equal to half (R/2) of the radius R of the rotating member 12.

A first centrifugal pump 10A can also be used as the foaming unit 10. In this case, in the raw material supply step, the first discharge port 18A of the first centrifugal pump 10A is used as the supply port 18, and the raw materials for producing foam can be supplied to the first discharge port 18A.

As described for the foaming apparatus, the raw materials for producing foam can include water, air, and a foaming agent.

The foaming agent is also referred to as a frother or a blowing agent. As the foaming agent, various foaming agents used in the production of gypsum plates can be used. For example, anionic, cationic, nonionic, and amphoteric surfactants can be used as the foaming agent. The foaming agent is preferably an anionic surfactant, and particularly preferably one or more sulfates selected from alkyl, alkyl aryl, alkyl ether, alkyl aryl ether, polyoxyethylene alkyl ether (polyethylene oxide alkyl ether), polyoxyethylene polyoxypropylene alkyl ether (polyethylene oxide polypropylene oxide alkyl ether), and the like.

In the foaming method of the present embodiment, the raw materials for producing foam containing the foaming agent are supplied to the supply port 18 of the foaming unit 10. In order to supply the raw materials for producing foam into the foaming unit 10, pressure can be applied to the raw materials for producing foam as necessary.

For example, it is preferable to supply the raw materials for producing foam to the foaming unit 10 by using pressurized air as the air contained in the raw materials for producing foam, and pressurizing water and the foaming agent as well. Further, if necessary, a pump for pressurizing the raw materials for producing foam can be provided on the raw material supply pipe 212.

### (Foaming step)

In the foaming step, the raw materials for producing foam is foamed in the foaming unit 10, and the foam can be ejected from the ejection port 17 of the foaming unit 10.

The foam obtained in the foaming step may be supplied to an external device or the like via the foam supply pipe 22, or may be supplied to and stored in a tank for storing the foam.

When the raw materials for producing foam is supplied from the supply port 18 provided in the outer peripheral area of the housing 11 and the foam is ejected from the ejection port 17 provided to include the inner peripheral area of the housing 11 in the raw material supply step and the foaming step, the raw materials for producing foam flow in the direction opposite to the direction in which the centrifugal force by the rotating member 12 that is rotating acts. Therefore, it is considered that the raw materials for producing foam can be uniformly mixed and foamed, and foam with bubbles having uniform sizes can be produced. As a result, according to the foaming method of the present embodiment, the amount of the raw materials for producing foam used per unit volume of the foam produced can be reduced.

### (Pretreatment step)

The foaming method of the present embodiment may further include an optional step. For example, the foaming method may also include a pretreatment step.

In the pretreatment step, the raw materials for producing foam can be supplied to the second suction port 17B of the second centrifugal pump 10B and mixed, and then supplied from the second discharge port 18B of the second centrifugal pump 10B to the supply port 18 of the foaming unit 10.

Because the foaming method of the present embodiment further includes the pretreatment step, the raw materials for producing foam can be mixed while being transported by the second centrifugal pump 10B. In the foaming step, the raw materials for producing foam can be mixed more uniformly in the foaming unit 10. Therefore, the amount of the raw materials for producing foam used per volume of the generated foam can be further reduced. That is, the amount of the raw materials for producing foam required for foaming can be further reduced.

### [Gypsum plate manufacturing apparatus]

Next, a configuration example of the gypsum plate manufacturing apparatus of the present embodiment will be described.

The gypsum plate manufacturing apparatus of the present embodiment can include a foaming apparatus according to one aspect of the present disclosure.

The gypsum plate manufacturing apparatus of the present embodiment and the type of gypsum plate manufactured by and the gypsum plate manufacturing method described below are not particularly limited.

The gypsum plate may be selected from, for example, a glass mat gypsum board, a glass fiber nonwoven fabric gypsum-containing plate, a gypsum board specified in JIS A 6901 (2014) (Japanese Industrial Standards), a gypsum board which is lighter or heavier than the gypsum board specified in JIS A 6901 (2014) (hereinafter, gypsum boards specified in JIS and gypsum boards that are lighter or heavier than gypsum boards specified in JIS are collectively referred to as a "gypsum board"), a slag gypsum board, and other gypsum plates.

The glass mat gypsum board is, for example, a gypsum plate whose surface is covered with a glass mat.

The glass fiber nonwoven fabric gypsum-containing plate is, for example, a gypsum plate in which a glass fiber nonwoven fabric (glass tissue) is embedded in the surface side.

The gypsum board is, for example, a gypsum plate whose surface is covered with board base paper.

The other gypsum plates are gypsum plates which are not classified into any of the above gypsum plates, for example, a gypsum plate having no surface paper.

The gypsum plate manufacturing apparatus according to the present embodiment may have various devices and means necessary for manufacturing gypsum plates in addition to the foaming apparatus according to one aspect of the present disclosure.

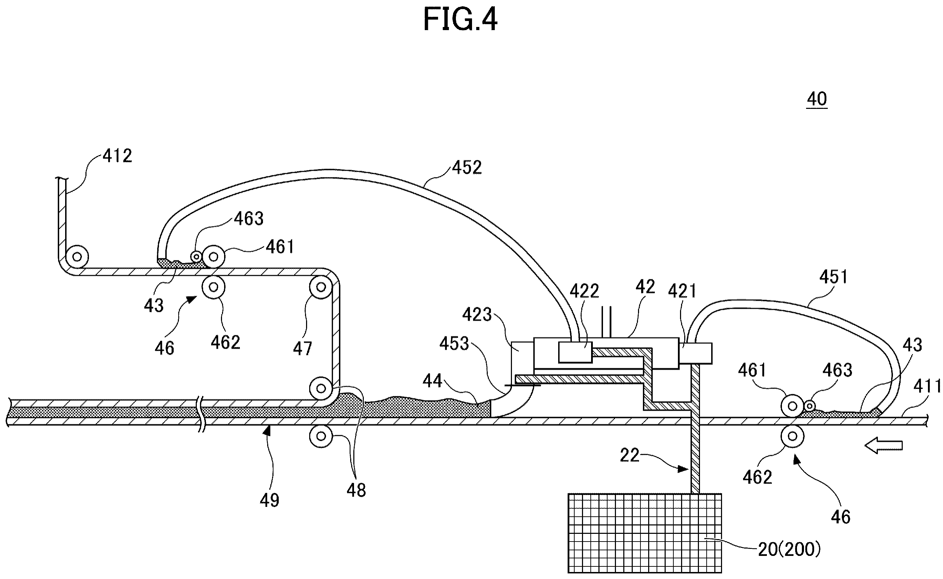

The configuration of the gypsum plate manufacturing apparatus according to the present embodiment will be described below with reference to FIG. 4 in which a case of manufacturing a gypsum board is taken as an example.

A gypsum plate manufacturing apparatus 40 illustrated in FIG. 4 includes, in addition to the foaming apparatus 20 described above, a mixer 42 as a mixing means for mixing raw materials and a molding machine 48 for molding the gypsum slurry prepared by the mixer 42. A specific example of the configuration of the apparatus will be described below. The foaming apparatus according to one aspect of the present disclosure can be used as the foaming apparatus, and because the foaming apparatus has already been described, the description thereof will be omitted.

### (1) Mixer

The mixer 42 can be arranged at a predetermined position associated with a transporting line of a first board base paper 411, a second board base paper 412, etc., which are covering materials, for example, above or next to the transporting line. In a single mixer 42, a gypsum slurry can be prepared by kneading calcined gypsum that is a raw material of a gypsum slurry, water, foam, and, in some cases, various additives.

Here, calcined gypsum is also referred to as calcium sulfate hemihydrate and is an inorganic composition having hydraulic properties. As the calcined gypsum, β-type calcined gypsum or α-type calcined gypsum can be used, alone or as a mixture of both. The β-type calcined gypsum is obtained by firing, in the atmosphere, gypsum mixed with natural gypsum, by-product gypsum, flue gas desulfurization gypsum, recycled gypsum such as a waste gypsum plate, alone or with any combination thereof. The α-type calcined gypsum is obtained by firing, in water (including in steam), gypsum mixed with natural gypsum, by-product gypsum, flue gas desulfurization gypsum, recycled gypsum such as a waste gypsum plate, alone or with any combination thereof.

When producing gypsum, it is preferable that the calcined gypsum used as the raw material contains β-type calcined gypsum, and it is more preferable that the main component of the calcined gypsum used as the raw material of the gypsum plate is β-type calcined gypsum. When the main component of the calcined gypsum used as the raw material of the gypsum plate is β-type calcined gypsum, it means that β-type calcined gypsum occupies more than 50% by mass of the calcined gypsum used as the raw material of the gypsum plate. In the production of the gypsum plate, the calcined gypsum used as the raw material may consist only of β-type calcined gypsum.

In order to produce α-type calcined gypsum, it is necessary to pressure-bake dihydrate gypsum such as natural gypsum in water or steam using an autoclave. On the other hand, β-type calcined gypsum can be produced by pressure-baking dihydrate gypsum such as natural gypsum in air, and β-type calcined gypsum can be produced with higher productivity than α-type calcined gypsum.

The additives include, for example, one or two or more selected from adhesiveness improvers for improving the adhesiveness between the gypsum hardened body (hardened gypsum slurry) such as starch or polyvinyl alcohol and the board base paper, inorganic fibers such as glass fibers, lightweight aggregates, fire resistant materials such as vermiculite, coagulation retardants, coagulation accelerators, water reducers, foaming agents such as alkyl sulfate sodas, alkyl ether sulfates, alkyl benzene sulfonate sodas, polyoxyethylene alkyl sulfates, foam size adjusters such as sulfosuccinate type surfactants, water repellents such as silicone and paraffin, organic carboxylic acids, organic carboxylic acid salt, and the like.

The calcined gypsum and some additives, for example solid additives, can be mixed and stirred in advance to form a gypsum composition which is a mixture and then supplied to the mixer 42.

Further, foam can be added at one or more selected locations among dispensing ports 421, 422, and 423 of the gypsum slurry, and the amount of foam added can be adjusted to make the gypsum slurry of any density. For example, no foam or a small amount of foam can be added from the dispensing ports 421 and 422 to prepare a high-density first gypsum slurry 43. Further, more foam can be added from the dispensing port 423 than in the case of the first gypsum slurry 43, to prepare a low-density second gypsum slurry 44.

Therefore, as illustrated in FIG. 4, the foam supply pipe 22 of the foaming apparatus 20 or the foaming apparatus 200 can be connected to one or more selected locations among the dispensing ports 421, 422, and 423. In FIG. 4, the foaming apparatus 20 is depicted as being arranged below the transporting line of the first board base paper 411 due to the sheet width of this diagram, but the position of the foaming apparatus 20 is not limited to this position and can be arranged at any position.

Then, the obtained first gypsum slurry 43 is supplied to the first board base paper 411 and the second board base paper 412 on the upstream side of a roller coater 46 in the transporting direction of the board base paper through delivery pipes 451 and 452.

The high-density first gypsum slurry 43 supplied to the first board base paper 411 and the second board base paper 412 reaches the spreading portion of the roller coater 46 and is spread at the spreading portion. The roller coater 46 may have a coating roller 461, a receiving roller 462, and a residue removal roller 463. When each piece of board base paper passes between the coating roller 461 and the receiving roller 462, the first gypsum slurry 43 can be spread on the board base paper.

In this way, a thin layer of the first gypsum slurry 43 is formed on the first board base paper 411. After that, the first board base paper 411 is folded, and both side edges thereof extend upward and then extend inward. A thin layer of the first gypsum slurry 43 is also formed on the second board base paper 412, but unlike the first board base paper 411, the second board base paper 412 is not folded. The mode is not limited to applying the first gypsum slurry 43 to both the first board base paper 411 and the second board base paper 412. For example, the first gypsum slurry 43 may be applied only to either the first board base paper 411 or the second board base paper 412. Further, the first gypsum slurry 43 may be arranged only on the side end which is the end in the width direction of the first board base paper 411.

The first board base paper 411 is transported without being changed, while the second board base paper 412 is turned by a turning roller 47 in the direction of the transporting line of the first board base paper 411.

### (2) Molding machine

The first board base paper 411 and the second board base paper 412 transported in the gypsum plate manufacturing apparatus 40 reach a molding machine 48. Here, the second gypsum slurry 44 is supplied from the mixer 42 through a conduit 453, between the thin layers of the first gypsum slurry 43 formed on the first board base paper 411 and the second board base paper 412. Thus, between the first board base paper 411 and the second board base paper 412, a continuous laminate in which a layer formed by the first gypsum slurry 43, a layer formed by the second gypsum slurry 44, and a layer formed by the first gypsum slurry 43 are laminated, can be formed.

Note that the mode is not limited to using the high-density first gypsum slurry 43 and the low-density second gypsum slurry 44. For example, a form in which a gypsum slurry of one density level is produced and supplied onto the board base paper may be used.

Specifically, for example, a gypsum slurry of a predetermined density is supplied and deposited onto the first board base paper 411 which is continuously transported. Then, both ends of the first board base paper 411 in the width direction are folded along a predetermined engraved line, and extend upward and then inward, so that the deposited layer of a gypsum slurry can be partially wrapped. Thereafter, the second board base paper 412 transported at the same speed can be superposed on the deposited layer of the gypsum slurry partially wrapped by the first board base paper 411. Next, the gypsum slurry is molded by passing the molding machine 48 which determines the thickness and width of the gypsum plate. The gypsum plate can also be molded by the above procedure. In this case, a layer of a gypsum slurry of one density level is formed between the first board base paper 411 and the second board base paper 412.

In this manner, the molding step for molding the gypsum slurry can be carried out in the molding machine 48 of the gypsum plate manufacturing apparatus 40, and thus the gypsum slurry molding 49 can be manufactured.

### (3) Dryer and cutting device

In the gypsum plate manufacturing apparatus 40 of the present embodiment, for example, a dryer and a cutting device can be provided on the downstream side of the molding machine 48 as needed.

The dryer can reduce excess moisture in the gypsum slurry molding.

The cutting device can cut the produced gypsum slurry molding or the gypsum plate to a desired size. The gypsum plate manufacturing apparatus 40 may have one or more cutting devices as needed. The gypsum plate manufacturing apparatus 40 may have, for example, a first cutting device (rough cutting device) that roughly cuts the produced gypsum slurry molding or the gypsum plate for the purpose of installing the gypsum slurry molding or the gypsum plate in a dryer. The gypsum plate manufacturing apparatus 40 may also have a second cutting device that cuts the gypsum plate according to the size of the final product.

According to the gypsum plate manufacturing apparatus of the present embodiment, because the foaming apparatus according to one aspect of the present disclosure is used, the amount of raw materials required for manufacturing foam can be reduced. Therefore, the cost required for manufacturing the gypsum plate can be reduced.

Moreover, because the foaming apparatus according to one aspect of the present disclosure can form bubbles having uniform sizes, the sizes of bubbles caused by foaming contained in the gypsum plate manufactured by the gypsum plate manufacturing apparatus of the present embodiment can be uniform, and the characteristics of the gypsum plate to be manufactured can be uniform.

### [Method for manufacturing gypsum plate]

The method for manufacturing the gypsum plate of the present embodiment may include a foam production step in which raw materials for producing foam are foamed by a foaming method according to one aspect of the present disclosure, and foam is produced.

In addition to the foam production step, the method for manufacturing the gypsum plate of the present embodiment may further include, for example, the following: a gypsum slurry preparation step, a molding step, a cutting step, a curing step, a drying step, and the like.

In the gypsum slurry preparation step, a gypsum slurry can be prepared by kneading calcined gypsum that is a raw material of the gypsum slurry, water, foam, and, in some cases, various additives.

In the molding step, the gypsum slurry can be molded into a plate.

In the cutting step, the gypsum slurry molding obtained in the molding step can be cut by a cutting device.

In the curing step, the gypsum slurry molding obtained in the molding step can be cured.

In the drying step, the gypsum slurry molding can be dried.

Each step will be described, by taking as an example, a case in which the gypsum plate is a gypsum board.

### (Foam production step)

In the foam production step, the raw materials for producing foam can be foamed by the foaming method according to one aspect of the present disclosure to produce foam. The foam produced in the foam production step can be supplied to undergo the gypsum slurry preparation step described below. Because the details of the foam production step have already been described in the foaming method, the description thereof will be omitted.

### (Gypsum slurry preparation step)

In the gypsum slurry preparation step, a gypsum slurry can be prepared by kneading calcined gypsum, water, foam, and, in some cases, various additives.

For example, a gypsum slurry can be prepared by kneading these raw materials with a mixer or the like as described with respect to the gypsum plate manufacturing apparatus. Because the raw materials of a gypsum slurry have already been described, the description will be omitted here.

### (Molding step)

In the molding step, the gypsum slurry obtained in the gypsum slurry preparation step can be formed into a plate. When the gypsum plate to be produced is a gypsum board, in the molding step, the gypsum slurry can be supplied in between two board base papers and formed into a plate.

For example, in the gypsum slurry molding step, the high-density first gypsum slurry 43 and the low-density second gypsum slurry 44 are formed beforehand. In the molding step, a continuous laminate, in which a layer of the high-density first gypsum slurry 43, a layer of the low-density second gypsum slurry 44, and a layer of the high-density first gypsum slurry 43 are laminated in this order, can be formed between the first board base paper 411 and the second board base paper 412. Then, the gypsum slurry molding can be formed in the form of a plate by passing the molding machine 48 which determines the thickness of the gypsum plate.

However, the molding step is not limited to the above mode, and the gypsum slurry of a desired density can be supplied in between the board base papers and formed in the form of a plate by the molding machine.

### (Cutting step)

In the cutting step, the gypsum slurry molding obtained in the molding step can be cut by a cutting device.

After the gypsum slurry molding is formed in the molding step, the gypsum slurry is gradually cured. Therefore, the cutting step can be carried out, for example, while the curing step described below is carried out or after the curing step is finished. However, it is preferable to carry out the cutting step after the curing step is advanced enough to cut the gypsum slurry molding.

The cutting step may be performed a plurality of times. Therefore, the method of manufacturing the gypsum plate of the present embodiment may include, for example, a first cutting step which can be referred to as a rough cutting step. In the first cutting step, the gypsum slurry molding or the gypsum plate can be cut to a desired size according to, for example, the size of the dryer used in the drying step described below.

The second cutting step can be performed, for example, after the drying step, to cut the gypsum plate to a desired product size.

### (Curing step)

A curing step can be performed after the molding step. The curing step is a step of curing the gypsum slurry molding formed in the molding step.

The curing step can be carried out by forming acicular crystals of gypsum dihydrate by a hydration reaction in calcined gypsum (hemihydrate gypsum) in the gypsum slurry, and condensing and solidifying the acicular crystals. Therefore, the curing step can be carried out by the reaction between the calcined gypsum added to the gypsum slurry and water, in the molding formed in the molding step, such that the hydration reaction of the calcined gypsum proceeds.

### (Drying step)

In the drying step, the gypsum slurry molding can be dried. In the drying step, the excess moisture contained in the gypsum slurry molding can be dried. The molding that has undergone the curing step can be supplied to undergo the drying step. The drying step can be performed by forcibly drying the molding by using a dryer.

Although the method of forcibly drying the molding by the dryer is not particularly limited, for example, the molding can be continuously dried by providing a dryer on the transport path of the molding and passing the molding through the dryer. Further, the molding can be carried into the dryer and dried in units of batches.

According to the method for manufacturing the gypsum plate of the present embodiment, the foam is produced by the foaming method according to one aspect of the present disclosure in the foam production step. Therefore, the amount of raw materials required for producing the foam can be reduced. Therefore, the cost required for manufacturing the gypsum plate can be reduced.

Moreover, because the foaming method according to one aspect of the present disclosure can form bubbles having uniform sizes, the sizes of bubbles caused by the foam contained in the gypsum plate manufactured by the method for manufacturing the gypsum plate of the present embodiment can be uniform, and the characteristics of the gypsum plates to be manufactured can be uniform.

### [Examples]

Specific examples will be described below, but the present invention is not limited to these examples.

### [Example 1]

Foam was produced by using the foaming apparatus 20 illustrated in FIG. 2.

Specifically, as illustrated in FIG. 2, foam was produced by using the foaming apparatus 20 including the foaming unit 10 and the raw material supply device 21 for supplying raw materials for producing foam containing a foaming agent to the supply port 18 of the foaming unit 10. (foam production step)

As the foaming unit 10, a centrifugal pump illustrated in FIG. 1, that is, the first centrifugal pump 10A, was used, and the raw materials for producing foam were supplied to the first discharge port 18A of the first centrifugal pump 10A. The first discharge port 18A of the first centrifugal pump 10A, which serves as the supply port 18 of the foaming unit 10, is provided on the side surface 111A of the housing 11. Therefore, the first discharge port 18A is provided on the outer peripheral area 11A of the housing 11. The raw materials for producing foam supplied from the first discharge port 18A, which serves as the supply port 18, are configured so as to contact the side surface 122 of the rotating member 12 and its periphery.

The rotating member 12 is installed on the rotating shaft 14, and as the rotating member 12, a rotating plate having blades 13 which are rotating blades rotating around the rotating shaft 14, is used.

The first suction port 17A of the first centrifugal pump 10A, which serves as the ejection port 17 of the foaming unit 10, is provided on the first end surface 111B of the housing 11, and the entire first discharge port 18A is provided in the inner peripheral area 11B.

A spiral pump was used as the first centrifugal pump 10A.

Then, the amount of raw materials for producing a volume of foam required per unit time was measured, in order to produce a gypsum board with a thickness of 12.5 mm at a manufacturing speed of 120 m/min. The amount of raw materials for producing foam was measured by using a flowmeter installed in the raw material supply pipe 212.

The raw material supply device 21 is equipped with a first raw material tank 211A, a second raw material tank 211B, and a third raw material tank 211C for storing a foaming agent composed of alkyl ether sulfate, water, and air, respectively. The raw material supply device 21 further includes a raw material supply pipe 212, and a static mixer is installed in the raw material supply pipe 212.

A foaming agent composed of alkyl ether sulfate and water, which are raw materials for producing foaming, were supplied to the raw material supply pipe 212 at a position upstream from the static mixer installed in the raw material supply pipe 212, and were mixed by the static mixer. Air was supplied to the raw material supply pipe 212 at a position downstream from the static mixer installed in the raw material supply pipe 212. As described above, a foaming agent composed of alkyl ether sulfate, water, and air, which are raw materials for producing foaming, were supplied from the raw material tank to the first centrifugal pump 10A via the raw material supply pipe.

The raw materials for producing foam were pressurized to be able to be supplied to the first discharge port 18A of the first centrifugal pump 10A, and were supplied to the first discharge port 18A.

As indicated in Table 1, it was confirmed that the volume of the raw materials for producing foam required per unit time for manufacturing the gypsum board under the above conditions, was 90 when the case of the comparative example 1 described below was 100.

### [Example 2]

Foam was produced by using the foaming apparatus 200 illustrated in FIG. 3.

As illustrated in FIG. 3, the foaming apparatus 200 includes a foaming unit 10, a second centrifugal pump 10B, and a raw material supply device 21 for supplying raw materials for producing foam containing a foaming agent to the second suction port 17B of the second centrifugal pump 10B. The foaming apparatus 200 further includes a pipe 31 for connecting the second discharge port 18B of the second centrifugal pump 10B and the supply port 18 of the foaming unit 10.

As the foaming unit 10, a centrifugal pump, that is, the first centrifugal pump 10A, was used. The first centrifugal pump 10A was the same as in example 1.

The raw materials for producing foam were pressurized to be able to be supplied to the first discharge port 18A of the first centrifugal pump 10A through the second centrifugal pump 10B, and were supplied to the first discharge port 18A. The raw material supply device 21 had the same configuration as in example 1.

A spiral pump of the same configuration and size was used as the first centrifugal pump 10A and the second centrifugal pump 10B.

Except for the above points, foam was produced under the same conditions as in example 1 (foam production step), and the amount of raw materials for producing foam, in producing the volume of foam required per unit time to manufacture a gypsum board with a thickness of 12.5 mm at a manufacturing speed of 120 m/min, was measured.

As indicated in Table 1, it was confirmed that the volume of raw materials in producing the volume of foam required per unit time to manufacture a gypsum board under the above conditions was 75, assuming that the case of comparative example 1, which will be described below, was 100.

The raw materials for producing foam were the same as those used in example 1.

### [Comparative example 1]

In the foaming apparatus 20 illustrated in FIG. 2, raw materials for producing foam were supplied to the first suction port 17A of the first centrifugal pump 10A by the raw material supply device 21, and the connection was changed so that the produced foam was discharged from the first discharge port 18A.

Except for the above points, foam was produced under the same conditions as in example 1 (foam production step), the amount of raw materials for producing foam, in producing the volume of foam required per unit time to manufacture a gypsum board with a thickness of 12.5 mm at a manufacturing speed of 120 m/min, was measured.

The first centrifugal pump 10A was the same as in example 1. The same raw materials for producing foam as those used in example 1 were used.

**[Table 1]**

| | |
|---|---|
| Example 1 | 90 |
| Example 2 | 75 |
| Comparative example 1 | 100 |

According to the results illustrated in Table 1, it was confirmed that it was possible to reduce the amount of raw materials required for producing foam by the foaming apparatuses of examples 1 and 2, in which the foaming apparatuses are provided with a foaming unit having a supply port and an ejection port within a predetermined area.

### [Clauses]

(1) A foaming apparatus according to one embodiment of the present disclosure includes
   a foaming unit; and
   a raw material supply device configured to supply a raw material for producing foam, the raw material including a foaming agent, wherein
   the foaming unit includes:
      a rotating shaft;
      a rotating member that is at least one element selected from among a rotating blade, a rotating wing, and a rotating plate that is installed on the rotating shaft and that rotates about the rotating shaft;
      a housing configured to house the rotating member;
      a supply port that is provided in the housing and that is configured to supply the raw material for producing foam into the housing from the raw material supply device; and
      an ejection port that is provided in the housing and that is configured to eject foam that is produced in the housing by foaming the raw material, wherein
   an area of the housing, which is separated from a central axis of the rotating member by more than half a radius of the rotating member, is defined as an outer peripheral area,
   an area of the housing, whose distance from the central axis of the rotating member is less than or equal to half the radius of the rotating member, is defined as an inner peripheral area,
   the supply port is provided in the outer peripheral area of the housing, and
   the ejection port is provided in the housing so as to include the inner peripheral area.
(2) In (1),
   the foaming unit may be a first centrifugal pump,
   the supply port may be a first discharge port of the first centrifugal pump, and
   the ejection port may be a first suction port of the first centrifugal pump.
(3) In (2), the first centrifugal pump may be a spiral pump or a turbine pump.
(4) In any one of (1) to (3),
   a second centrifugal pump arranged between the foaming unit and the raw material supply device may be further included, wherein
   a second discharge port of the second centrifugal pump and the supply port of the foaming unit may be connected by a pipe, and
   the raw material supplying device may supply the raw material for producing foam to a second suction port of the second centrifugal pump.
(5) A gypsum plate manufacturing apparatus according to one embodiment of the present disclosure includes
   the foaming apparatus according to any one of (1) to (4).
(6) A foaming method according to one embodiment of the present disclosure includes
   a raw material supply step of supplying a raw material for producing foam to a supply port of a foaming unit, the raw material including a foaming agent; and
   a foaming step of foaming the raw material in the foaming unit to produce foam and ejecting the foam from an ejection port of the foaming unit, wherein
      the foaming unit includes:
         a rotating shaft;
         a rotating member that is at least one element selected from among a rotating blade, a rotating wing, and a rotating plate that is installed on the rotating shaft and that rotates about the rotating shaft;
         a housing configured to house the rotating member;
         the supply port that is provided in the housing and that is configured to supply the raw material for producing foam into the housing; and
         the ejection port that is provided in the housing and that is configured to eject the foam that is produced in the housing by foaming the raw material, wherein
      an area of the housing, which is separated from a central axis of the rotating member by more than half a radius of the rotating member, is defined as an outer peripheral area,
      an area of the housing, whose distance from the central axis of the rotating member is less than or equal to half the radius of the rotating member, is defined as an inner peripheral area,
      the supply port is provided in the outer peripheral area of the housing, and
      the ejection port is provided in the housing so as to include the inner peripheral area.
(7) In (6), the foaming method may further include a pretreatment step of supplying the raw material for producing foam to a second suction port of a second centrifugal pump, mixing the raw material, and then supplying the raw material from a second discharge port of the second centrifugal pump to the supply port of the foaming unit.
(8) A gypsum plate manufacturing method according to one embodiment of the present disclosure includes
   a foam production step of foaming the raw material for producing foam by the foaming method according to (6) or (7) to produce the foam.

The foaming apparatus, the gypsum plate manufacturing apparatus, the foaming method, and the gypsum plate manufacturing method have been described by the above embodiments, etc., but the present invention is not limited to the above embodiments, etc. Various modifications and changes can be made within the scope of the gist of the present invention described in the claims.

The present international application is based upon and claims priority to Japanese Patent Application No. 2023-035721 filed on March 8, 2023, the entire contents of which are incorporated herein by reference.

### EXPLANATION OF REFERENCE NUMERALS

- 10: foaming unit
- 10A: first centrifugal pump
- 10B: second centrifugal pump
- 11: housing (casing)
- 11A: outer peripheral area
- 11B: inner peripheral area
- 111A: side surface
- 111B: first end surface
- 111C: second end surface
- 12: rotating member
- 121: upper surface
- 122: side surface
- 13: blade
- 14: rotating shaft
- 15: shaft seal
- 16: bearing
- 17: ejection port
- 17A: first suction port
- 17B: second suction port
- 18: supply port
- 181: supply pipe
- 18A: first discharge port
- 18B: second discharge port
- R: radius
- A: central axis
- 20, 200: foaming apparatus
- 21: raw material supply device
- 211: raw material tank
- 211A: first raw material tank
- 211B: second raw material tank
- 211C: third raw material tank
- 212: raw material supply pipe
- 22: foam supply pipe
- 31: pipe
- 40: gypsum plate manufacturing apparatus
- 411: first board base paper
- 412: second board base paper
- 42: mixer
- 421, 422, 423: dispensing port
- 43: first gypsum slurry
- 44: second gypsum slurry
- 451, 452: delivery pipe
- 453: conduit
- 46: roller coater
- 461: coating roller
- 462: receiving roller
- 463: residue removal roller
- 47: turning roller
- 48: molding machine
- 49: gypsum slurry molding

## Claims

1. A foaming apparatus comprising:
a foaming unit; and
a raw material supply device configured to supply a raw material for producing foam, the raw material including a foaming agent, wherein
the foaming unit includes:
a rotating shaft;
a rotating member that is at least one element selected from among a rotating blade, a rotating wing, and a rotating plate that is installed on the rotating shaft and that rotates about the rotating shaft;
a housing configured to house the rotating member;
a supply port that is provided in the housing and that is configured to supply the raw material for producing foam into the housing from the raw material supply device; and
an ejection port that is provided in the housing and that is configured to eject foam that is produced in the housing by foaming the raw material, wherein
an area of the housing, which is separated from a central axis of the rotating member by more than half a radius of the rotating member, is defined as an outer peripheral area,
an area of the housing, whose distance from the central axis of the rotating member is less than or equal to half the radius of the rotating member, is defined as an inner peripheral area,
the supply port is provided in the outer peripheral area of the housing, and
the ejection port is provided in the housing so as to include the inner peripheral area.

2. The foaming apparatus according to claim 1, wherein
the foaming unit is a first centrifugal pump,
the supply port is a first discharge port of the first centrifugal pump, and
the ejection port is a first suction port of the first centrifugal pump.

3. The foaming apparatus according to claim 2, wherein the first centrifugal pump is a spiral pump or a turbine pump.

4. The foaming apparatus according to any one of claims 1 to 3, further comprising:
a second centrifugal pump arranged between the foaming unit and the raw material supply device, wherein
a second discharge port of the second centrifugal pump and the supply port of the foaming unit are connected by a pipe, and
the raw material supplying device supplies the raw material for producing foam to a second suction port of the second centrifugal pump.

5. A gypsum plate manufacturing apparatus comprising:
the foaming apparatus according to any one of claims 1 to 3.

6. A foaming method comprising:
a raw material supply step of supplying a raw material for producing foam to a supply port of a foaming unit, the raw material including a foaming agent; and
a foaming step of foaming the raw material in the foaming unit to produce foam and ejecting the foam from an ejection port of the foaming unit, wherein
the foaming unit includes:
a rotating shaft;
a rotating member that is at least one element selected from among a rotating blade, a rotating wing, and a rotating plate that is installed on the rotating shaft and that rotates about the rotating shaft;
a housing configured to house the rotating member;
the supply port that is provided in the housing and that is configured to supply the raw material for producing foam into the housing; and
the ejection port that is provided in the housing and that is configured to eject the foam that is produced in the housing by foaming the raw material, wherein
an area of the housing, which is separated from a central axis of the rotating member by more than half a radius of the rotating member, is defined as an outer peripheral area,
an area of the housing, whose distance from the central axis of the rotating member is less than or equal to half the radius of the rotating member, is defined as an inner peripheral area,
the supply port is provided in the outer peripheral area of the housing, and
the ejection port is provided in the housing so as to include the inner peripheral area.

7. The foaming method according to claim 6, further comprising:
a pretreatment step of supplying the raw material for producing foam to a second suction port of a second centrifugal pump, mixing the raw material, and then supplying the raw material from a second discharge port of the second centrifugal pump to the supply port of the foaming unit.

8. A gypsum plate manufacturing method comprising:
a foam production step of foaming the raw material for producing foam by the foaming method according to claim 6 or 7 to produce the foam.
